(19) Europäisches Patentamt

European Patent Office

Office européen des brevets

(11) Veröffentlichungsnummer: **0 403 918 B1**

(12) **EUROPÄISCHE PATENTSCHRIFT**

(45) Veröffentlichungstag der Patentschrift: **13.04.94**

(21) Anmeldenummer: **90111033.8**

(22) Anmeldetag: **12.06.90**

(51) Int. Cl.5: **C08K 3/34**, C08L 21/00

(54) **Hitzebeständige Kautschukmassen auf Basis von hydriertem Nitrilkautschuk.**

(30) Priorität: **22.06.89 DE 3920466**

(43) Veröffentlichungstag der Anmeldung:
**27.12.90 Patentblatt 90/52**

(45) Bekanntmachung des Hinweises auf die
Patenterteilung:
**13.04.94 Patentblatt 94/15**

(84) Benannte Vertragsstaaten:
**DE FR GB IT**

(56) Entgegenhaltungen:
**FR-A- 1 196 849**
**GB-A- 2 040 900**
**US-A- 3 832 327**

**DATABASE WPIL, Nr. 87-337137[48], Derwent Publications Ltd, London, GB;& JP-A-62 240 338**

(73) Patentinhaber: **BAYER AG**

**D-51368 Leverkusen(DE)**

(72) Erfinder: **Thömer, Joachim,Dr.**
**Emil-Nolde-Strasse 39**
**D-5090 Leverkusen(DE)**
Erfinder: **Rohde, Ernst, Dr.**
**Emil-Nolde-Strasse 35**
**D-5090 Leverkusen(DE)**
Erfinder: **Szentivanyi, Zsolt, Dr.**
**z. Zeit Bayer Japan,**
**Div. KA,**
**12-15-Shiba-Daimon**
**1-chome Minato-Ku, Tokyo(JP)**

**Beschreibung**

Die Erfindung betrifft Kautschukmassen auf Basis von hydriertem Nitrilkautschuk, die Natriumaluminiumsilikat als Füllstoff enthalten, ein Verfahren zur Herstellung dieser Kautschukmassen durch Mischen der Komponenten und die Verwendung dieser Kautschukmassen zur Herstellung von Vulkanisaten.

Die Hydrierung von Nitrilkautschuk ist bekannt; US-PS 3 700 637, DE-OS 2 539 132, 3 046 008, 3 046 251, 3 227 650, 3 329 974, EP-A 111 412 , FR-PS 2 540 503. Hydrierter Nitrilkautschuk zeichnet sich durch hohe Reißfestigkeit, geringen Abrieb, niedrig bleibende Verformungen nach Druck- und Zugbeanspruchung und gute Ölbestandigkeit, vor allem aber durch bemerkenswerte Stabilität gegen thermische und oxidative Einflüsse aus.

Zur Erzielung guter mechanischer Eigenschaften, wie Zugfestigkeit, Bruchdehnung, Spannungswerte, werden Elastomeren verstärkende Füllstoffe, in der Regel Ruße oder mineralische Füllstoffe, wie z. B. Kieselsäure, zugesetzt; vgl. z.B. DE-OS 3 226 081.

Überraschenderweise wurde nun gefunden, daß mit Natriumaluminiumsilikat gefüllte hydrierte Nitrilkautschuke bei Heißluftalterung eine geringere Verschlechterung mechanischer Eigenschaften (wie z.B. der Reißdehnung) erleiden als andere mineralische Füllstoffe (wie gefälltes oder pyrogen hergestelltes Siliciumdioxid, Talkum, Kreide, calciniertes Kaolin, Glimmer, Diatomeenerde, Magnesiumoxid und Zinkoxid) enthaltende hydrierte Nitrilkautschuke. Dieser Befund ist qualitativ unabhängig vom Vulkanisationsgrad (trifft also auch auf nicht vulkanisierte Kautschukmassen zu) und überraschenderweise auch vom verwendeten Vulkanisationssystem.

Gegenstand der Erfindung sind also Kautschukmassen auf Basis hydrierten Nitrilkautschuks, enthaltend - bezogen auf hydrierten Nitrilkautschuk - 20 bis 200, vorzugsweise 35 bis 110, Gew.-% Natriumaluminiumsilikat.

Unter "hydriertem Nitrilkautschuk" oder "HNBR" sollen im Sinne dieser Erfindung Nitrilkautschuke, deren C = C-Doppelbindungen selektiv (d.h. ohne Hydrierung der C≡N-Dreifachbindung) teilweise oder vollkommen hydriert sind, verstanden werden. Bevorzugte hydrierte Nitrilkautschuke sind solche mit einem Hydriergrad, bezogen auf die vom Butadien stammenden C = C-Doppelbindungen, von mindestens 80, bevorzugt von mindestens 95, insbesondere von mindestens 98 %. Der Hydriergrad läßt sich NMR- und IR-spektroskopisch bestimmen.

Den hydrierten Nitrilkautschuken liegen Dien/(Meth-)Acrylnitril-Copolymerisate zugrunde. Isopren und insbesondere Butadien sind bevorzugte Diene. Die Copolymerisate besitzen einen Gehalt an copolymerisierten Acrylnitril- und/oder Methacrylnitrileinheiten von 5 bis 60, vorzugsweise 10 bis 50 Gew.-%.

Die hydrierten Nitrilkautschuke besitzen in der Regel Mooney-Viskositäten (DIN 53 523) von 10 bis 150, vorzugsweise von 25 bis 80 (ML 1 + 4)/100°C.

Bevorzugte Natriumaluminiumsilikate enthalten, bezogen auf das bei 105°C getrocknete Produkt, mindestens 3 Gew.-% $Na_2O$, mindestens 3 Gew.-% $Al_2O_3$ und mindestens 60 Gew.-% $SiO_2$ nach DIN 55 921/2, vorzugsweise 6 bis 8 Gew.-% $Na_2O$, 6 bis 8 Gew.-% $Al_2O_3$ und mindestens 75 Gew.-% $SiO_2$. Sie besitzen eine BET-Oberfläche von 60 bis 70 $m^2/g$ und einen pH-Wert (nach DIN 53 200) von 10 bis 12. Ein bevorzugtes derartiges Natriumaluminiumsilikat ist beispielsweise unter der Handelsbezeichnung ®Vulkasil A1 (Bayer AG, Leverkusen) erhältlich.

Den erfindungsgemäßen Kautschukmassen können selbstverständlich noch übliche Hilfsmittel, wie beispielsweise Weichmacher, Harze, Faktisse und Stabilisatoren zur Erzielung bestimmter Rohmischungs- oder Vulkanisateigenschaften zugesetzt werden. Als Füllstoffaktivatoren kann man Silane zusetzen, wobei in den meisten Fällen 1 bis 3 Gew.-%, bezogen auf Kautschuk, ausreichen.

Das Mischen der Komponenten kann auf üblichen Mischaggregaten erfolgen.

Bevorzugte Mischaggregate sind die in der Kautschukindustrie üblichen Kneter, Walzen, Innenmischer und Mischextruder, die in der Regel mit Scherraten von 1 bis 1.000 $sec^{-1}$, vorzugsweise 2 bis 200 $sec^{-1}$, arbeiten.

Weiterer Gegenstand der Erfindung ist also ein Verfahren zur Herstellung der beschriebenen Kautschukmassen durch Mischen der Komponenten.

Als Vernetzungssysteme kommen alle in der Kautschuktechnik bekannten Systeme wie Schwefelvernetzung, Peroxidvernetzung, Urethanvernetzung, Metalloxidvernetzung, Harzvernetzung und deren Kombinationen in Frage. Schwefel- und Peroxidvulkanisation werden bevorzugt.

Ausführliche Beschreibungen von Schwefelvulkanisiersystemen finden sich bei W. Hofmann, "Vulkanisation und Vulkanisationshilfsmittel", Verlag Berliner Union GmbH, Stuttgart 1965 und bei Alliger und Sjothun, "Vulcanization of Elastomers", Reinhold Pub. Corp. New York 1964. Geeignete Schwefelspender umfassen Thiurampolysulfide wie z.B. Dipentamethylenthiuram-tetra- und -hexasulfid, Tetramethylthiuram-disulfid; Amindisulfide wie z.B. Dimorpholyldisulfid; Natriumpolysulfide und Thioplaste.

Bevorzugte Schwefelvulkanisiersysteme enthalten

a) Schwefel oder Schwefelspender,

b) gegebenenfalls Vulkanisationsbeschleuniger und

c) gegebenenfalls einen oder mehrere Aktivatoren.

Als Menge a) verwendet man in der Regel 0,2 bis 3,0 Gew.-% Schwefel (im Falle von Schwefelspender: berechnet als freiwerdender Schwefel), bezogen auf Kautschuk.

Die Vulkanisationsbeschleuniger b) verwendet man im allgemeinen in Mengen von 1 bis 3,5 Gew.-%, bezogen auf Kautschuk. Bevorzugte Vulkanisationsbeschleuniger b) umfassen Thiazolbeschleuniger wie 2-Mercaptobenzothiazol,

Dibenzothiazyl-disulfid,

Benzothiazyl-2-cyclohexylsulfenamid (CBS),

Benzothiazyl-2-tert.-butylsulfenamid (TBBS),

N-Morpholinothio-2-benzothiazol (MBS),

Benzothiazyl-2-diisopropylsulfenamid (DIBS),

Benzothiazyl-2-tert.-amylsulfenamid (AMZ),

Benzothiazyl-dicyclohexylsulfenamid (DCBS) und

Morpholino-thiocarbonyl-sulfenmorpholid (OTOS).

Weitere bevorzugte Vulkanisationsbeschleuniger b) umfassen Diphenylguanidin (DPG) und Di-o-tolylguanidin (DOTG); Thiurame wie Thiurammono- und -disulfide; und Dithiocarbamate.

Die bedeutendsten Aktivatoren c) sind die Metalloxide, insbesondere Zinkoxid. In einzelnen Fällen wird auch Magnesiumoxid oder Calciumhydroxid verwendet.

Für die Peroxidvulkanisation bevorzugte Peroxide umfassen

Dialkylperoxide,

Ketalperoxide,

Aralkylperoxide,

Peroxidether,

Peroxidester, wie z.B.

Di-tert.-butylperoxid,

Bis-(tert.-butylperoxiisopropyl)-benzol,

Dicumylperoxid,

2,5-Dimethyl-2,5-di(tert.-butylperoxy)-hexan,

2,5-Dimethyl-2,5-di(tert.-butylperoxy)-hexen-(3),

1,1-Bis(tert.-butylperoxy)-3,3,5-trimethyl-cyclohexan,

Benzoylperoxid,

tert.-Butylcumylperoxid und

tert.-Butylperbenzoat.

Die Peroxidmengen liegen vorzugsweise im Bereich von 4 bis 8 Gew.-%, bezogen auf Kautschuk.

Die Vulkanisation kann bei Temperaturen von 100 bis 200°C, vorzugsweise 130 bis 180°C, gegebenenfalls unter einem Druck von 10 bis 200 bar, erfolgen. Im Anschluß an die Vulkanistion können die Vulkanisate durch Lagerung bei höherer Temperatur getempert werden.

Die Vulkanisation kann auch durch energiereiche Strahlung erzielt werden.

"Vulkanisiert" im Sinne der Erfindung bedeutet, daß bei 10stündiger Extraktion im Soxhlet-Aufsatz mit Toluol als Extraktionsmittel weniger als 10, vorzugsweise weniger als 5, Gew.-%, bezogen auf Kautschuk, extrahierbar ist.

Weiterer Gegenstand der Erfindung ist die Verwendung der beschriebenen Kautschukmassen zur Herstellung von Vulkanisaten.

Die erfindungsgemäßen Kautschukmassen und - vorzugsweise - die daraus erhaltenen Vulkanisate können in Gestalt jeglicher denkbarer Formkörper (Schläuche, Dichtungen, Antriebselemente, wie Zahn- und Keilriemen, oder Kabelmäntel) Verwendung finden.

Die in den nachfolgenden Beispielen genannten Teile sind Gewichtsteile, Prozentangaben bedeuten Gew.-%.

Beispiele

Verwendete Komponenten:

HNBR 1:    Hydrierungsprodukt eines Butadien/Acryl-nitril-Copolymerisats mit einem Acrylnitrilgehalt von 34,8 % und einem Hydriergrad der C=C-Doppelbindungen von über 99 %, Mooney-Viskosität von 77 (ML 1+4)/100° C (®Therban 1707 der Bayer AG, Leverkusen).

HNBR 2:    Hydrierungsprodukt eines Butadien/Acryl-nitril-Copolymerisats mit einem Acrylnitrilgehalt von 33,7 % und einem Hydriergrad der C=C-Doppelbindungen von 96,4 %, Mooney-Viskosität von 67 (ML 1+4)/100° C (®Therban 1707 S der Bayer AG, Leverkusen).

Zinkoxid    ®Zinkoxyd aktiv der Bayer AG, Leverkusen

Magnesiumoxid    ®Maglite DE der Fa. Merck/USA

octyliertes Diphenylamin    ®Vulkanox OCD der Bayer AG, Leverkusen

Zinksalz von Mercaptobenz-imidazol    ®Vulkanox ZMB 2 der Bayer AG, Leverkusen

| | |
|---|---|
| Vinylsilan | Silan A 172 der Fa. Union Carbide Corp./ USA |
| Mercaptosilan | Silan A 189 der Fa. Union Carbide/USA |
| Triallyliso-isocyanurat | Diak Nr.7 der Fa. DuPont, Wilmington/ Del.,USA |
| Bis-(tert.-butylperoxy-isopropyl)-benzol | ®Perkadox 14/40 der Fa. Akzo-Chemie, Düren |
| TMTD[1] | ®Vulkacit Thiuram C der Bayer AG, Leverkusen |
| CBS[2] | ® Vulkacit CZ/MG der Bayer AG, Leverkusen |
| pyrogene Kieselsäure | ®Aerosil 200 V der Fa. Degussa, Wesseling |
| gefällte Kieselsäure | ®Vulkasil S der Bayer AG, Leverkusen |

| Natriumalumi- | ®Vulkasil A1 der Bayer AG, Leverkusen |
| niumsilikat | |
| | |
| Mikrotalk | Mistron Vapor der Fa. Sierra Talk, Co. |
| | Norwegen, |
| Hartkaolin | Dixie Clay der Fa. R.T. Vanderbilt |
| | |
| calciniertes | Whitetex Nr. 2 der Fa. Freeport Kaolin |
| Kaolin | Co., Gordon, USA |
| | |
| Diatomeenerde | ®Celite 350 der Fa. Johns-Manville |
| | |
| Kreide | ®Omyalite 90 der Fa. Omya, Köln |

¹⁾ Tetramethylthiuramdisulfid (Vulkanisationsbeschleuniger)

²⁾ Benzothiazyl-2-cyclohexylsulfonamid (Zweitbeschleuniger)

Compoundierung:

Es wurden 3 verschiedene Serien hergestellt, nämlich
Serie A:     Peroxid-Vulkanisate von HNBR 1 mit einem Hydriergrad von über 99 %
Serie B:     Peroxid-Vulkanisate von HNBR 2 Hydriergrad von 96,4 %
Serie C:     Schwefel-Vulkanisate von HNBR 2 Hydriergrad von 96,4 %
Die Compoundierung erfolgte nach folgenden Vorschriften:
Serie A:     Auf einem Kneter (Füllung 100 %, Temperatur 50°C, 27 UpM, Stempeldruck 5 bar) wird der Kautschuk 1 Minute bearbeitet, nach Zugabe von Alterungsschutzmitteln, Metalloxiden und 1/3 der Füllstoffmenge 2 Minuten, nach Zugabe von Silan und einem weiteren 1/3 der Füllstoffmenge 2 Minuten und nach Zugabe der restlichen Füllstoffmenge und von TAIC weitere 2 Minuten geknetet. Das Peroxid wird auf einer Walze zugemischt.
Serie B:     Auf einem Kneter (Füllung 65 %, Temperatur 40°C, 40/20 UpM, Stempeldruck 8 bar) wird bei 40 UpM der Kautschuk 1 Minute nach Zugabe von Alterungsschutzmitteln, Metalloxiden, TAIC und 1/3 der Füllstoffmenge 1 Minute, nach Zugabe von Silan und einem weiteren 1/3 der Füllstoffmenge 1 Minute, nach Zugabe der restlichen Füllstoffmenge 1/2 Minute und bei 20 UpM nach Zugabe des Peroxides 1 1/2 Minuten geknetet. Die Massetemperatur der Mischung sollte dabei soweit sinken, daß das Peroxid keine vorzeitige Vulkanisation bewirkt.
Serie C:     Kautschuk und Schwefel wurden auf einer Walze bei 40°C 2 Minuten lang gemischt. Anschließend wurde auf einen Kneter (Füllung 65 %, Temperatur 30°C, 40/20 UpM, Stempeldruck 8 bar) bei 40 UpM die Mischung 1 Minute bearbeitet, nach Zugabe von Alterungsschutzmittel, Stearinsäure, Metalloxiden und 1/3 der Füllstoffmenge 1 Minute, nach Zugabe von Silan und einem weiteren 1/3 der Füllstoffmenge 1 Minute, nach Zugabe der restlichen Füllstoffmenge 1/2 Minute und bei 20 UpM nach Zugabe der Beschleuniger 1 1/2 Minuten geknetet. Vor Zugabe des Beschleunigersystems sollte die Mischungstemperatur bei 100°C liegen; ggf. kann man zum Einmischen auf eine Walze übergehen.

Die Füllstoffmenge (s. unten) wurde jeweils so bemessen, daß jeweils Vulkanisate mit annähernd gleicher Härte (Shore A) resultierten.

Aus den oben beschriebenen vulkanisierbaren Mischungen wurden Platten mit den Abmessungen 100 x 100 x 2 mm hergestellt, wobei die Vulkanisationsbedingungen die folgenden waren:

Serie A:     12 Minuten/180°C, Temperung 6 h/150°C
Serie B:     15 Minuten/180°C, Temperung 6 h/150°C
Serie C:     15 Minuten/160°C, keine Temperung

Aus den vulkanisierten Platten wurden S2-Stäbe zur Bestimmung der Reißdehnung vor und nach Heißluftalterung ausgestanzt.

Die Heißluftalterung wurde in einem Zellenofen durchgeführt.

Zu den folgenden Tabellen wird die relative Reißdehnung D/Do angegeben, wobei D der Wert nach und Do der Wert vor der Heißluftalterung ist. Die für die Rezeptur angegebenen Zahlen sind Gewichtsteile.

7

Tabelle 1: S e r i e A

| | pyrogene Kiesel-säure | gefällte Kiesel-säure | Natrium-aluminium-silikat | Mikro-talk | Hart-Kaolin | calci-niertes Kaolin | Diato-meen-erde | Kreide |
|---|---|---|---|---|---|---|---|---|
| Beispiel-Nr. | 1 | 2 | 3 | 4 | 5 | 6 | 7 | 8 |
| HNBR 1 | 100 | | | | | | | |
| Magnesiumoxid | 2 | | | | | | | |
| Zinkoxid | 2 | | | | | | | |
| Octyliertes Diphenylamin | 1 | | | | | | | |
| Zinksalz von Mercapto-benzimidazol | 0,4 | | | | | | | |
| Vinylsilan | 1,5 | | | | | | | |
| Triallylisocyanurat | 1,5 | | | | | | | |
| Bis(tert.-butylperoxy-isopropyl)benzol | 7 | | | | | | | |
| Füllstoff | 30 | 40 | 55 | 75 | 75 | 55 | 100 | 100 |
| nach Lagerung bei 150° C/42 Tage rel. Reißdehnung D/Do (%) | 58 | 46 | 74 | 38 | 34 | 12 | zerst. | 50 |

EP 0 403 918 B1

**Tabelle 2:** S e r i e  B

| | pyrogene Kiesel-säure | gefällte Kiesel-säure | Natrium-aluminium-silikat | Mikro-talk | Hart-Kaolin | calci-niertes Kaolin | Diato-meen-erde | Kreide |
|---|---|---|---|---|---|---|---|---|
| Beispiel-Nr. | 1 | 2 | 3 | 4 | 5 | 6 | 7 | 8 |
| HNBR 2 | 100 | | | | | | | |
| Magnesiumoxid | 2 | | | | | | | |
| Zinkoxid | 2 | | | | | | | |
| Octyliertes Diphenylamin | 1 | | | | | | | |
| Zinksalz von Mercapto-benzimidazol | 0,4 | | | | | | | |
| Vinylsilan | 1,5 | | | | | | | |
| Triallylisocyanurat | 1,5 | | | | | | | |
| Bis(tert.-butylperoxy-isopropyl)benzol | 7 | | | | | | | |
| Füllstoff | 25 | 35 | 50 | 65 | 70 | 60 | 70 | 100 |
| nach Lagerung bei 150°C/21 Tage rel. Reißdehnung D/Do (%) | 57 | 57 | 76 | 41 | 13 | 5 | zerst. | 29 |

EP 0 403 918 B1

Tabelle 3:  S e r i e  C

| Beispiel-Nr. | pyrogene Kiesel-säure 1 | gefällte Kiesel-säure 2 | Natrium-aluminium-silikat 3 | Mikro-talk 4 | Hart-Kaolin 5 | calci-niertes Kaolin 6 | Diato-meen-erde 7 | Kreide 8 |
|---|---|---|---|---|---|---|---|---|
| HNBR 2 | 100 | | | | | | | |
| Schwefel | 0,51 | | | | | | | |
| Stearinsäure | 1 | | | | | | | |
| Magnesiumoxid | 2 | | | | | | | |
| Zinkoxid | 2 | | | | | | | |
| Octyliertes Diphenylamin | 1,5 | | | | | | | |
| Zinksalz von Mercapto-benzimidazol | 2 | | | | | | | |
| Mercaptosilan | 1,5 | | | | | | | |
| TMTD | 2 | | | | | | | |
| CBS | 0,5 | | | | | | | |
| Füllstoff | 25 | 35 | 50 | 65 | 70 | 60 | 80 | 100 |
| nach Lagerung bei 150°C/17 Tage rel. Reißdehnung D/Do (%) | 58 | 37 | 60 | 46 | 29 | 30 | 20 | 50 |

## Patentansprüche

1. Kautschukmassen auf Basis hydrierten Nitrilkautschuks enthaltend - bezogen auf hydrierten Nitrilkautschuk -20 bis 200 Gew.-% Natriumaluminiumsilikat.

**2.** Kautschukmassen nach Anspruch 1 enthaltend 35 bis 110 Gew.-% Natriumaluminiumsilikat.

**3.** Kautschukmassen nach Ansprüchen 1 und 2, worin das Natriumaluminiumsilikat, bezogen auf das bei 105°C getrocknete Produkt, mindestens 3 Gew.-% $Na_2O$, mindestens 3 Gew.-% $Al_2O_3$ und mindestens 60 Gew.-% $SiO_2$ enthält.

**4.** Kautschukmassen nach Ansprüchen 1 bis 3, worin das Natriumaluminiumsilikat, bezogen auf das bei 105°C getrocknete Produkt, 6 bis 8 Gew.-% $Na_2O$, 6 bis 8 Gew.-% $Al_2O_3$ und mindestens 75 Gew.-% $SiO_2$ enthält.

**5.** Verfahren zur Herstellung der Kautschukmassen nach Ansprüchen 1 bis 4 durch Mischen der Komponenten.

**6.** Verwendung der Kautschukmassen nach Ansprüchen 1 bis 4 zur Herstellung von Vulkanisaten.

## Claims

**1.** Rubber compounds based on hydrogenated nitrile rubber containing 20 to 200% by weight, based on hydrogenated nitrile rubber, of sodium aluminium silicate.

**2.** Rubber compounds as claimed in claim 1 containing 35 to 110% by weight sodium aluminium silicate.

**3.** Rubber compounds as claimed in claims 1 and 2, in which the sodium aluminium silicate contains at least 3% by weight $Na_2O$, at least 3% by weight $Al_2O_3$ and at least 60% by weight $SiO_2$, based on the product dried at 105°C.

**4.** Rubber compounds as claimed in claims 1 to 3, in which the sodium aluminium silicate contains 6 to 8% by weight $Na_2O$, 6 to 8% by weight $Al_2O_3$ and at least 75% by weight $SiO_2$, based on the product dried at 105°C.

**5.** A process for the production of the rubber compounds claimed in claims 1 to 4 by mixing of the components.

**6.** The use of the rubber compounds claimed in claims 1 to 4 for the production of vulcanizates.

## Revendications

**1.** Compositions de caoutchouc à base de caoutchouc nitrile hydrogéné, contenant - par rapport au caoutchouc nitrile hydrogéné - 20 à 200 parties en poids de silicate de sodium et d'aluminium.

**2.** Compositions de caoutchouc suivant la revendication 1, contenant 35 à 110 % en poids de silicate de sodium et d'aluminium.

**3.** Compositions de caoutchouc suivant les revendications 1 et 2, dans lesquelles le silicate de sodium et d'aluminium contient, sur la base du produit séché à 105°C, au moins 3 % en poids de $Na_2O$, au moins 3 % en poids de $Al_2O_3$ et au moins 60 % en poids de $SiO_2$.

**4.** Compositions de caoutchouc suivant les revendications 1 à 3, dans lesquelles le silicate de sodium et d'aluminium contient, sur la base du produit séché à 105°C, 6 à 8 % en poids de $Na_2O$, 6 à 8 % en poids de $Al_2O_3$ et au moins 75 % en poids de $SiO_2$.

**5.** Procédé de production de compositions de caoutchouc suivant les revendications 1 à 4, par mélange des composants.

**6.** Utilisation des compositions de caoutchouc suivant les revendications 1 à 4 pour l'obtention de produits vulcanisés.